(19) **Europäisches Patentamt / European Patent Office / Office européen des brevets**

(11) **EP 2 069 833 B1**

(12) # EUROPÄISCHE PATENTSCHRIFT

(45) Veröffentlichungstag und Bekanntmachung des Hinweises auf die Patenterteilung:
**21.04.2010 Patentblatt 2010/16**

(21) Anmeldenummer: **07818488.4**

(22) Anmeldetag: **27.09.2007**

(51) Int Cl.:
**G02B 5/122** *(2006.01)*    **G01C 15/06** *(2006.01)*

(86) Internationale Anmeldenummer:
**PCT/EP2007/008405**

(87) Internationale Veröffentlichungsnummer:
**WO 2008/043436 (17.04.2008 Gazette 2008/16)**

(54) **ZIELOBJEKT ZUR RETROREFLEXION EINER OPTISCHEN STRAHLUNG**

TARGET OBJECT USED FOR RETROFLEXION OF OPTICAL RADIATION

OBJET CIBLE DESTINE A LA RETRO-REFLEXION D'UN RAYONNEMENT OPTIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **06.10.2006 CH 15912006**

(43) Veröffentlichungstag der Anmeldung:
**17.06.2009 Patentblatt 2009/25**

(73) Patentinhaber: **Leica Geosystems AG**
**9435 Heerbrugg (CH)**

(72) Erfinder:
- **BERNHARD, Heinz**
  **9442 Berneck (CH)**
- **HINDERLING, Jürg**
  **9437 Marbach (CH)**
- **PETERMANN, Marco**
  **09432 Grossolbersdorf (DE)**

(74) Vertreter: **Kaminski Harmann**
**Patentanwälte Est.**
**Austrasse 79**
**9490 Vaduz (LI)**

(56) Entgegenhaltungen:
| | |
|---|---|
| EP-A- 1 645 846 | WO-A-90/00719 |
| WO-A-97/08572 | WO-A-98/44363 |
| US-A- 2 763 000 | US-A- 3 039 093 |
| US-A- 4 551 726 | US-A- 5 097 265 |
| US-A1- 2003 021 028 | |

- **NOBUO SUGIMOTO ET AL: "RETROREFLECTOR WITH ACUTE DIHEDRAL ANGLES" OPTICS LETTERS, OSA, OPTICAL SOCIETY OF AMERICA, WASHINGTON, DC, US, Bd. 19, Nr. 20, 15. Oktober 1994 (1994-10-15), Seiten 1660-1662, XP000445452 ISSN: 0146-9592**

## Beschreibung

Die Erfindung betrifft ein Zielobjekt zur Retroreflexion einer optischen Strahlung nach dem Oberbegriff des Anspruchs 1, eine Vorrichtung mit einem solchen Zielobjekt und die Verwendung eines Lotstocks mit einem Zielobjekt als Messtaster.

Optische Strahlung reflektierende Zielobjekte werden insbesondere im Vermessungswesen schon seit langem zur Definition von Messstrecken eingesetzt. Dabei ist es üblich, mittels geeigneter Messinstrumente die Distanz und/oder die Richtung bzw. Richtungen zum Zielobjekt und ggf. auch die Ausrichtung desselben zu bestimmen. Auch bekannt ist es, dem Zielobjekt ein Positioniersystem, wie ein GPS, zuzuordnen und so die Position des Zielobjekts im Raum bzw. relativ zum Positioniersystem zu ermitteln.

Ein solches Zielobjekt, das zur Reflexion der Strahlung ein reflektives Element bzw. mehrere reflektive Elemente, wie Prismen oder Reflexfolien aufweist, wird z.B. - insbesondere in der geodätischen und industriellen Vermessung sowie der Bauvermessung - an einem zu vermessenden Punkt platziert, welcher Punkt so mittels des Zielobjekts markiert und über das Zielobjekt vermessen wird. Das Zielobjekt wird dazu in einer vorgegebenen Position relativ zum zu vermessenden Punkt positioniert. Dazu weist das Zielobjekt beispielsweise einen Lotstock zum Platzieren und Positionieren desselben am entsprechenden Zielpunkt auf. Anhand eines Messinstruments, wie eines Theodoliten oder Tachymeters, wird die Position des Zielobjekts gemessen und daraus die Position des Punktes abgeleitet. Um eine gewünschte Ausrichtung des Zielobjekts gegenüber dem Messinstrument zu gewährleisten, ist am Lotstock oft noch ein Ausrichtungsindikator, z.B. eine Libelle, angebracht.

Weitere Anwendungen für derartige Zielobjekte finden sich im Verkehrswegbau, wo die Trassenführung mittels eines ein reflektives Element aufweisenden Lotstocks abgesteckt wird, und in der Maschinenführung, wo ein Zielobjekt oder mehrere Zielobjekte auf einer Maschine angebracht und mit einem Messinstrument verfolgt werden.

Für die unterschiedlichen Anwendungen hat es sich als besonders günstig erwiesen, Zielobjekte derart auszubilden, dass sie aus mehr als nur einer Richtung, vorteilhaft aus allen Richtungen, anvisiert und vermessen werden können. So muss der Vermesser, der das Zielobjekt trägt und an unterschiedlichen Punkten aufstellt, nicht bei jedem Aufstellen auf eine korrekte Ausrichtung zum Messinstrument achten. Weiters wird bei Vermessungsvorgängen mit wechselnder Instrumentenaufstellung oftmals auf denselben Fixpunkt gemessen, wobei die an den Fixpunkten positionierten Zielobjekte aus unterschiedlichen Richtungen anvisiert werden. Im Verkehrswegbau - beispielsweise beim Bau von Strassentunnels - werden Messungen auf ein- und denselben Messpunkt respektive das Zielobjekt oft aus im Wesentlichen entgegengesetzten Richtungen durchgeführt, wobei ein jeweils neues Ausrichten des Zielobjekts unerwünscht ist. Ebenso ist für die Vermessung von bewegten Objekten ein Zielobjekt, das aus einem grossen Winkelbereich, insbesondere 360 Grad, vermessbar ist, wünschenswert.

Den einfachsten Fall eines solchen Zielobjekts stellt ein Zielobjekt mit einem Kugelreflektor dar, welches allerdings in Bezug auf seine Einsatzmöglichkeiten beschränkt ist, da Kugelreflektoren nur auf geringe Entfernungen vermessen werden können. Für Messungen auch auf grosse Entfernungen sind verschiedene Zielobjekte mit sogenannten 360°- oder Rundum-Reflektoren bekannt.

So zeigt die US 4,875,760 eine Anordnung mit einer Vielzahl von Einzelprismen, die über einen Azimutalwinkelbereich von 360° verteilt an einem Aufnahmekörper angebracht sind. Die Prismen wirken jedoch als Einzelprismen mit "Reflexionslöchern" dazwischen - es wird keine Anordnung bereitgestellt, die Strahlung aus jeder Einfallsrichtung rund um die Anordnung reflektiert. Ausserdem entstehen insbesondere bei Schrägzielungen mit grossen Vertikalwinkeln auf die Anordnung Fehler in der Höhebestimmung eines Messpunktes.

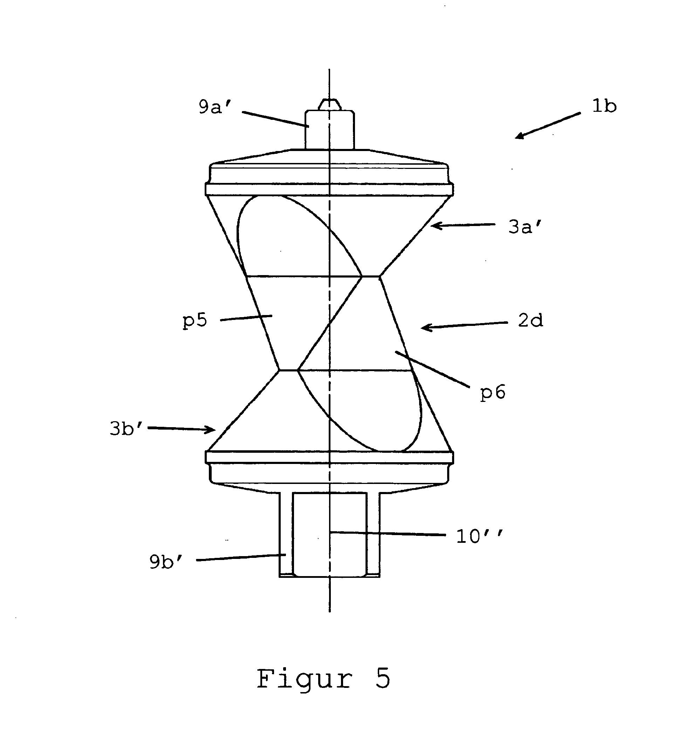

In der EP 0 846 278 ist ein Rundumreflektor mit mehreren Tripelprismen beschrieben. Die Tripelprismen sind derart angeordnet, dass sich die Seitenflächen benachbarter Tripelprismen berühren, wodurch sich beim Übergang der Retroreflexion von einem Tripelprisma zum benachbarten Tripelprisma die Pupillen der benachbarten Prismen wenigstens teilweise berühren. Dadurch wirkt die Anordnung als Rundumreflektor, der Licht aus allen Einfallsrichtungen reflektiert. In Figur 5 der Patentschrift ist der Rundumreflektor in einer Fassung dargestellt. Die Fassung weist einen Adapter zum Ankoppeln an einer Haltevorrichtung, wie einem Stativ oder Lotstock, auf, über welche Haltevorrichtung eine Verwendung als Zielobjekt für Messpunkte erleichtert wird. Der Rundumreflektor ist allerdings für Messungen im Nahbereich weniger geeignet, da auf geringe Distanzen die Messungen aufgrund von Störreflexionen verfälscht werden.

Aus der US 4,416,509 ist ein Reflektor mit Tripelprismen zur Messung von Strömungsparametern in Gewässern bekannt, wobei eine Anordnung aus zwei Prismenkränzen zu je sechs zylindrisch angeordneten Prismen beschrieben ist. Die Seitenflächen benachbarter Prismen berühren sich jedoch nicht, sondern lediglich die Eckpunkte. Dadurch werden einerseits die Bauformen der Prismenkränze unvorteilhaft vergrössert und andererseits auch die Abstände der Prismenspitzen, was insgesamt zu Messungenauigkeiten hinsichtlich Seiten- und Höhenlagemessungen sowie Distanzmessungen führt.

Die DE 102 09 895 zeigt einen Rundumreflektor mit einer Anordnung von acht Tripelprismen in Form zweier Pyramiden, die mit ihren Grundflächen zueinander gerichtet sind. Durch die spezielle Anordnung der Tripelprismen werden Störreflexionen, insbesondere Doppelreflexionen, im Horizontalwinkelbereich verringert. Bei grossen, von der Horizontalebene abweichenden Vertikalwinkeln sind jedoch nach wie vor Störreflexe vorhanden, was insbesondere beim automatisierten Führen und Steuern von Baumaschinen einen bedeutenden Störfaktor darstellt. Um ein positionierbares Zielobjekt auszubilden, wird an der Prismenanordnung ein Aufnahmeteil angeordnet, an welchem ein Lotstock angebracht werden kann. Das Aufnahmeteil ist von unten direkt auf die Prismenanordnung aufgesetzt, was beispielsweise beim harten Aufsetzten des Lotstocks auf einen Untergrund zu erheblichen Krafteinwirkungen auf die zerbrechlichen Tripelprismen führt.

Ein den beschriebenen Anordnungen aus dem Stand der Technik gemeinsamer Nachteil ist deren Empfindlichkeit in Bezug auf Beschädigungen der reflektierenden, üblicherweise aus Glas gebildeten, Elemente durch äussere mechanische Einwirkungen. Die Empfindlichkeit ist insbesondere dadurch bedingt, dass die Anordnungen zur Rundumreflexion der Strahlung mit Glasteilen, deren Lichteintrittsflächen einen 360°-Azimutal-Winkelbereich abdecken, ohne äussere Schutzvorrichtungen auszubilden sind. Zur Halterung der Glasteile weisen die meisten Anordnungen Aufnahmeteile auf, die direkt mit den Glasteilen verbunden sind, wodurch äussere Krafteinwirkungen auf die zerbrechlichen Glasteile geleitet werden.

Da das Zielobjekt oftmals derart verwendet wird, dass es von einem Vermesser im Gelände aufgestellt und versetzt wird, soll das Zielobjekt handhaltbar und tragbar und daher möglichst leicht sein. Deshalb werden üblicherweise Haltevorrichtungen, wie Lotstökke, mit geringem Gewicht eingesetzt. Aufgrund des hohen Gewichts der Reflektoranordnung und des geringen Gewichts des Lotstocks entsteht nun ein unwuchtiges Zielobjekt, das leicht umfällt, wobei die empfindlichen Glasteile leicht brechen können. Bei der immer häufiger auftretenden Ausführung eines Zielobjekts, bei welchem die Reflektoranordnung zusätzlich ein GPS trägt, tritt diese Problematik noch verstärkt auf. Auch im Verkehrswegbau, wo die Zielobjekte auf Baumaschinen aufgesetzt sind, wirken aufgrund von Vibrationen erhebliche Kräfte auf die Zielobjekte, was zu Schwingungen führt und insbesondere die Verbindung zwischen Aufnahmeteil und Reflektoranordnung stark strapaziert.

Der Erfindung liegt die Aufgabe zugrunde, Mängel des Standes der Technik zu beheben.

Diese Aufgabe wird erfindungsgemäss durch die Gegenstände der Ansprüche 1, 13, 14 bzw. der abhängigen Ansprüche gelöst oder die Lösungen weitergebildet.

Die Erfindung beruht darauf, dass Tripelprismen als reflektive Elemente eines Zielobjekts zur Retroreflexion optischer Strahlung derart angeordnet werden, dass ein Rundumreflektor mit einem Freiraum im Zentrum zur Aufnahme eines Teilbereichs eines Lotstocks realisiert wird. Die Anordnung der Tripelprismen erfolgt weiters derart, dass die virtuellen Bilder der Tripelprismen im Wesentlichen in derselben Ebene liegen. Die Ausbildung des zentralen Freiraums für den Lotstock ermöglicht eine balanciertere und stabilere Anbringung des Prismenrings an einer Haltevorrichtung, wie einem Lotstock. Als Lotstock wird eine Haltevorrichtung zum Platzieren und gegebenenfalls genauen Positionieren des Zielobjekts bezeichnet. Unter Teilbereich eines Lotstocks ist eine dem Lotstock mittelbar zugeordnete Komponente, wie ein mit dem Lotstock lösbar verbundenes Element, oder unmittelbar zugeordnete Komponente, wie ein Teil - z.B. das obere Drittel - eines einstückigen Lotstocks, zu verstehen.

Durch die Anordnung derart, dass die virtuellen Bilder der Prismenspitzen alle in im Wesentlichen einer Ebene liegen, werden Höhenfehler des Reflektors - Fehler in der Höhenwinkel- und Lagemessung - stark reduziert, insbesondere bei Anzielwinkeln nahe dieser Ebene. Mit einer kompakten Bauweise des Prismenrings, die beispielsweise realisiert wird, indem die Prismen möglichst eng gegeneinander verschachtelt werden, sodass sich die Seitenflächen der Prismen paarweise berühren, und/oder eine geringe Anzahl - z.B. sechs oder acht - von Prismen zu einem Ring zusammengefasst wird, kann der Höhenfehler auch bei Schrägvisuren gering gehalten werden. Die Prismenspitzen einer solcherart kompakten Prismenanordnung liegen nahe einer durch das Zentrum der Prismenanordnung - des Prismenrings - verlaufenden Bezugsachse des Zielobjekts. Als Prismenspitze ist der gemeinsame Schnittpunkt der drei Spiegelebenen des Prismen-Retroreflektors zu verstehen. Liegen die Prismenspitzen der Prismenanordnung des Zielobjekts möglichst nahe der Bezugsachse desselben, wird eine Reduktion des Höhenfehlers in Lage und Winkel des zu vermessenden Zielobjekts auch bei Schrägvisuren ausserhalb der Horizontalebene erreicht.

Die Ebene, in welcher die virtuellen Bilder liegen, steht senkrecht auf die Bezugsachse. Der Lotstock bzw. ein Teilbereich desselben ist im zentralen Freiraum des Rings anordenbar. Die Lotstockachse verläuft dann parallel zur Bezugsachse, insbesondere fällt sie mit der Bezugsachse zusammen.

Die Tripelprismen sind ring- bzw. kranzartig so angeordnet, dass die Eintrittsflächen der Prismen sozusagen einen äusseren Umfangsflächenbereich des Prismenrings bilden. Der Ring umfasst wenigstens sechs, insbesondere drehsymmetrisch und identisch ausgebildete, Tripelprismen. Mit sechs Tripelprismen lässt sich eine im Wesentlichen geschlossene zusammenhängende Umfangsfläche bilden. Der Ring kann auch acht oder zehn Tripelprismen umfassen, wobei die Umfangsfläche mit steigender Prismenanzahl jedoch zunehmend zerklüftet ist. Die Prismenspitzen sind gegen die Bezugsachse durch das Zentrum gerichtet. Indem die nach innen gerichteten Prismenspitzen abgeschliffen werden, wird bei gleich bleibendem Aussenumfang des Rings der Freiraum im Ringzentrum vergrössert. Mit solcherart als angebrochene Ecken ausgebildeten Prismenspitzen lässt sich der Rundumreflektor zusätzlich besser anzielen, da sich derart die Sichtbarkeit des Reflexionszentrums des Reflektors verbessert, was insbesondere für eine manuelle Anzielung günstig ist.

In einer Weiterbildung der Erfindung werden die Tripelprismen aus einem im Vergleich zum üblichen verwendeten Glas höherbrechenden Glas ausgebildet. Beispielsweise wird Glas mit einem Brechungsindex $n \geq \sqrt{3}$ verwendet. Mittels der ausgesuchten Wahl des Glases können weitere Eigenschaften des Rundumreflektors verwirklicht und/oder verbessert werden.

So können einmal durch die entsprechende Auswahl des Prismenmaterials Störreflexe, insbesondere Dachkanten-Dual-Reflexe, stark verringert werden. Die Ausbildung der Prismen aus Glas mit einem Brechungsindex von $n \geq \sqrt{3}$ kann diese störenden Dual-Reflexe sogar vollständig eliminieren, da eine entsprechende Reflexionsbedingung für den gesamten Winkelbereich zur Eintrittsfläche nicht mehr gegeben ist. Diese Reduzierung bzw. Eliminierung von Störreflexen, die eine scheinbare Bewegung des Zielobjekts vortäuschen können, stellt insbesondere auch für den Einsatz von automatisierten Messinstrumenten mit ATR- (automatic target recognition) Funktion einen entscheidenden Vorteil dar.

Mit der Wahl des Glases ist weiter vorteilhaft die Additionskonstante des Rundumreflektors einstellbar. Die Additionskonstante oder Reflektorkonstante ist der messtechnisch erforderliche Korrekturwert, mittels welchem eine gemessene Distanz auf die Bezugsachse bezogen werden kann und abhängig von Brechungsindex, Form, Dicke und Anordnung der Reflektorelemente. Jeder Reflektortyp weist eine reflektorspezifische Additionskonstante auf. Übliche Messinstrumente weisen Datenverarbeitungssoftware auf, mittels welcher Additionskonstanten für spezifische Reflektortypen bereitgestellt werden, die für den jeweils verwendeten Reflektortyp ausgewählt und in der Datenauswertung berücksichtigt wird. Der Benutzer muss die Instrumentenkonfiguration dem Reflektor anpassen, was häufig vergessen wird, woraus dann zwangsläufig Fehlmessungen resultieren.

In einer Weiterbildung der Erfindung erfolgt nun eine Auswahl von Prismenmaterial, Prismenabmessungen und Prismenanordnung derart, dass der durch den Prismenring gebildete Rundumreflektor eine Additionskonstante aufweist, die der Additionskonstante eines gleichartigen Reflektortyps oder eines bekannten, mit im Handel erhältlichen Messinstrumenten verwendeten, Referenzreflektors entspricht und zusätzlich die Anforderung an eine hohe - geodätisch relevante - Lage-Messgenauigkeit erfüllt. Insbesondere kann die Additionskonstante in Hinblick auf eine standardmässig in vielen Messinstrumenten vorgesehene Standard-Additionskonstante eingestellt werden. Damit wird ein neuer Rundumreflektor bereitgestellt, der mit ,,alten" Messinstrumenten kompatibel ist, sodass kein Um- oder Aufrüsten der Messinstrumente erforderlich ist.

Weiters sind die Tripelprismen als Ring vorteilhaft derart angeordnet, dass die Seitenflächen benachbarter Prismen aneinanderliegen und die freien Öffnungen benachbarter Prismen sich gegenseitig berühren. Durch diese Anordnung reduzieren sich die Signalschwankungen für unterschiedliche Richtungen, sodass für Distanzmessungen keine azimutabhängigen Reichweiten- und/oder Genauigkeitsunterschiede auftreten. Die Messgenauigkeit sowohl in der horizontalen als auch der vertikalen Winkel- und Lagemessung wird derart verbessert. Weiters sind mit den aneinanderliegenden freien Öffnungen der Einzelprismen für das Messinstrument in jeder Ausrichtung des Zielobjekts respektive für jede Anzielrichtung in einem Horizontalwinkelbereich von 360° rund um das Zielobjekt zwei oder drei freie Öffnungen- und damit insgesamt eine grössere freie Prismen-Öffnung - sichtbar, was z.B. für eine automatische Zielverfolgung (ATR) besonders vorteilhaft ist, da das Messinstrument insgesamt ein grösseres und integrativ ortsstabileres Bild erfasst und so die automatische Zielverfolgung robuster und genauer wird. Als freie Öffnung oder freie Prismen-Öffnung wird der Querschnitt aller in die interessierende Richtung reflektierter Strahlen und das Ergebnis aller Blenden in die entsprechende Strahlausbreitungsrichtung bezeichnet. Die freie Prismen-Öffnung des Rundumreflektors kann aus mehreren benachbarten, den Einzelprismen zugeordneten freien Öffnungen bestehen.

Die Tripelprismen des Prismenrings sind flächig fest miteinander verbunden. Die Verbindung erfolgt beispielsweise über Verkitten, Verkleben oder Diffusionsschweissen. Die vergleichsmässig grösseren Klebeflächen ermöglichen eine kraftfeste und sehr stabile Verbindung.

Um den solcherart formstabil und kompakt ausgeführten Ring zu halten, weist das Zielobjekt eine Fassung respektive Halterung auf. Die Fassung ist zweiteilig mit einem oberen und unteren Fassungskörper, die jeweils einen Freiraum zur Aufnahme des Teilbereichs des Lotstocks aufweisen, ausführbar. Der Prismenring/Prismenkranz kann dann zwischen den beiden Fassungskörpern derart angeordnet werden, dass keine Abschattung der Prismen-Eintrittsflächen durch die Fassung erfolgt. Derart ist ein Horizontalwinkelbereich von 360 Grad einsehbar. Prismenring und Fassung sind vorteilhaft weiters derart ausgebildet und angeordnet, dass auch ein festlegbarer Vertikalwinkelbereich, insbesondere von wenigstens +/-45 Grad, einsehbar ist.

In einer vorteilhaften Weiterbildung der Erfindung ist die Fassung zur schocksicheren Lagerung des Prismenrings - Rundumreflektors - ausgebildet. Dazu ist die Fassung derart ausgeführt und der Glasring in der Fassung derart gehalten, dass bei äusserer Kraft- oder Drehmomenteinwirkung - z.B. beim Umfallen des Zielobjekts - keine oder kaum eine Kraftübertragung auf den Glasring stattfindet.

Diese schocksichere Lagerung wird in einer Ausführungsform realisiert, indem die ringartig zum Rundumreflektor zusammengesetzten Tripelprismen schwimmend in der zwei Fassungskörper aufweisenden Fassung gehalten sind. Die Fassungskörper weisen jeweils eine Aufnahme für einen Teilbereich des Lotstocks auf. In diesem Fall ist der in der Fassung aufgenommene Teilbereich des Lotstocks ein Lotstockelement, das als kraftübertragende Verbindung zwischen den beiden Fassungskörpern vorgesehen ist.

Die Fassungskörper sind in einer Ausführungsform zumindest teilweise aus einem elastischen, beispielsweise gummiartigen, Material gebildet und stellen eine doppelkegel-förmige Fassung dar. Unter kegelförmig ist in diesem Zusammenhang eine umrisshaft grob kegelartige Form zu verstehen, wie z.B. auch eine pyramidartige Form. Beispielsweise ist die Form der Fassungskörper in der Art sechseckiger Pyramiden. Als kegelartig oder kegelförmig wird im Rahmen der Erfindungsbeschreibung eine Form bezeichnet, bei der die Leitkurve - die Kurve des Kegelschnitts - geschlossen ist, aber eine beliebige Form aufweisen kann. Pyramiden mit n-eckigen Leitkurven sind demgemäss ebenfalls als Kegel-förmige Körper zu verstehen. Allgemein sind die Fassungskörper vorzugsweise doppelkegelartig ausgebildet, sodass sie im Bereich des Prismenrings wenig ausgedehnt sind, insbesondere einen dem Aussenumfang des Prismenrings im Wesentlichen entsprechenden Aussenumfang aufweisen, und sich in der Richtung vom Prismenring weg weiter ausdehnen. Derart wird erreicht, dass bei einem Umfallen des Zielobjekts dieses auf die Fassung und nicht auf den Prismenring fällt. Prinzipiell kann natürlich eine Fassung beliebiger Gestalt eingesetzt werden, die vorteilhaft die zwei Bedingungen erfüllen sollte, dass die Prismen durch die Fassung nicht abgeschattet werden und beim Umfallen der Prismenring durch die Fassung geschützt wird.

Das einen kraftübertragenden, insbesondere formstabilen, Stab darstellende Lotstockelement ist in den Aufnahmen, die zentral in den Fassungskörpern durch Freiräume gebildet sind, fest gehalten. Beispielsweise ist das Lotstockelement mit den Fassungskörpern in den Aufnahmen verbunden oder es ist in die Aufnahmen gespannt. In dieser Ausführungsform ist der Teil-Bereich des Lotstocks also als Lotstockelement zentral vom oberen Fassungsköper durch den Prismenring zum unteren Fassungskörper geführt. Gegebenenfalls können auch mehrere, insbesondere parallel zur Bezugsachse durch das Zentrum des Rings angeordnete, Verbindungselemente als Teilbereich des Lotstocks vorgesehen werden.

Durch eine derartige Ausbildung wird erreicht, dass ein äusserer Stoss mit grosser Wahrscheinlichkeit nicht den Prismenring sondern die Fassung trifft und der Kraftstoss über das Lotstockelement auf beide Fassungskörper übertragen wird. Der Glasring ist durch die schwimmende Aufnahme von der zerstörerischen Impulsänderung abgeschirmt. Die kraftübertragende Verbindung zwischen den beiden Fassungskörpern - das Lotstockelement - ist vorteilhaft aus hartelastischem Material, sodass keine plastische Verformung auftritt. In einer vorteilhaften Ausführungsform weisen die Fassungskörper beidenends noch schockabsorbierende Elemente, wie Membranen, auf. Eine Krafteinwirkung von Aussen trifft dann auf eines der mebranartigen, schockabsorbierenden Element und wird gedämpft auf die beiden starr verbundenen Fassungskörpern übertragen und gedämpft, während der schwimmend in der Fassung gehaltene Tripelprismen-Ring von der kraftübertragenden Wirkung weitgehend entkoppelt ist.

Der als kraftübertragendes Element vorgesehene Teilbereich des Lotstocks ist aus einem hochfesten Material gebildet. Beispielsweise ist der Teilbereich aus Kohlefaser und/oder Verbundstoff oder hochfestem vergüteten Federstahl ausgebildet.

Für eine Ausführungsform der Erfindung wie vorgängig beschrieben ist der Lotstock mehrteilig ausgebildet. Ein Lotstock mit separaten Lotstock-Bereichen, wobei ein Bereich den im Rundumreflektor aufgenommenen Teilbereich darstellt, weist einen Adapter zur Verbindung mit dem Teilbereich auf. Die Lotstock-Bereiche werden z.B. durch Stecken, Schnappen oder Schrauben verbunden. Sie können auch ineinander passen und so ineinander verschiebbar höhenverstellbar ausgebildet sein.

Ebenso kann der Lotstock einstückig ausgeführt sein. Der einstückige Lotstock ist dann durch den Freiraum der Prismenanordnung derart führbar, dass er wiederum als kraftübertragendes Element wirkt. Eine Krafteinwirkung wird dann beispielsweise einenends auf den Untergrund, auf dem der Lotstock platziert ist, abgeleitet. Der Lotstock kann auch durch das Zielobjekt durchgeführt werden, sodass er an dessen Oberseite mehr oder weniger weit herausragt.

Am - einteiligen oder mehrteiligen - Lotstock oder an der Fassung können einenends oder beidenends Adapter - wie der vorgängig erwähnte Adapter zur Verbindung von Lotstock-Bereichen - angebracht sein, an welche Adapter Haltevorrichtungen und/oder weitere Baugruppen für die Vermessung, z.B. ein GPS, ankoppelbar sind.

In einer alternativen Ausführungsform kann die Fassung auch einstückig ausgebildet sein. Der Prismenring wird um diese einteilige Fassung herum geklebt. Eine weitere Ausführungsform sieht vor, die oben beschriebenen Fassungskörper mit inneren und äusseren Komponenten auszubilden, wobei die inneren Komponenten Aufnahmen für den Lotstock-Teilbereich aufweisen und die äusseren Komponenten zur schwimmenden Aufnahme des Prismenrings vorgesehen sind. In einer weiteren alternativen Ausführungsform sind ebenfalls innere und äussere Komponenten vorgesehen, wobei die inneren Komponenten aus hartelastischem Material, welches insbesondere einen dem Ausdehnungskoeffizienten des Prismenglases entsprechenden Ausdehnungskoeffizienten aufweist, gebildet und mit dem Prismenring fest verbunden sind. Dabei sind die mit dem Prismenring fest verbundenen inneren Komponenten schwimmend in weiteren Bauteilen der Fassung oder z.B. zwischen den oben erwähnten Adaptern gelagert - z.B. über O-Ringe.

Das erfindungsgemässe Zielobjekt wird nachfolgend anhand von in den Zeichnungen schematisch dargestellten Ausführungsbeispielen rein beispielhaft näher beschrieben. Im Einzelnen zeigen:

Fig. 1    eine Ausführungsform eines erfindungsgemässen Zielobjekts im Schnitt;

Fig. 2    einen Prismenkranz eines erfindungsgemässen Zielobjekts in Draufsicht;

Fig. 3    einen Prismenkranz eines erfindungsgemässen Zielobjekts im Schnitt;

Fig. 4    in zwei Teilfiguren Frontansichten eines Prismenrings eines erfindungsgemässen Zielobjekts;

Fig. 5    ein erfindungsgemässes Zielobjekt;

Fig. 6    die Verwendung eines Lotstocks mit einem erfindungsgemässen Zielobjekt als Messtaster;

Fig. 7    eine Vorrichtung mit einem Lotstock, einem erfindungsgemässen Zielobjekt und einer GPS-Antenne.

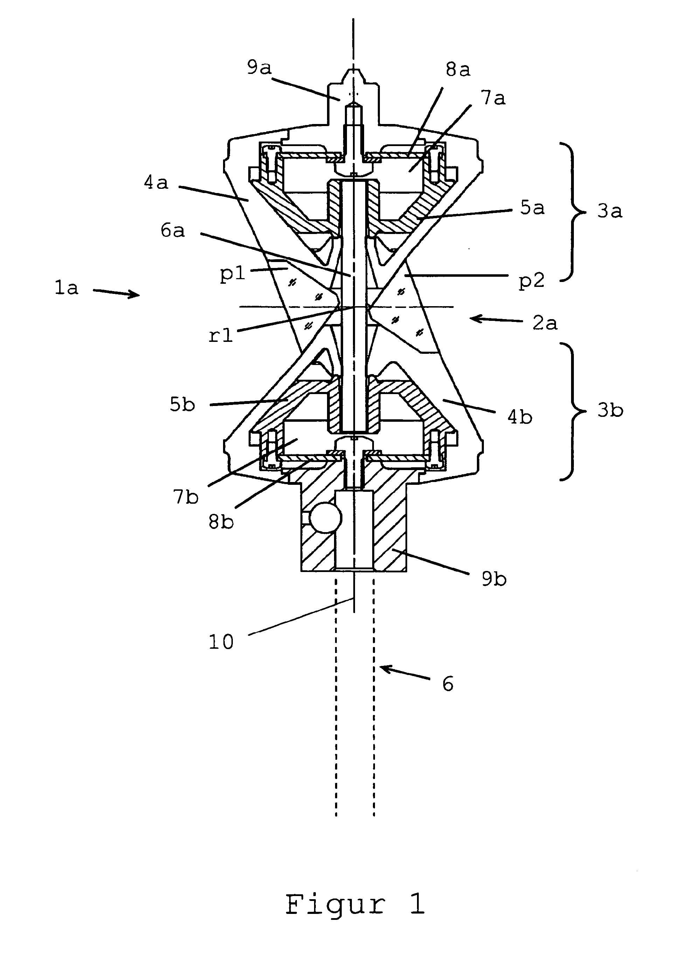

Die Figur 1 zeigt eine Ausführungsform eines erfindungsgemässen Zielobjekts im Schnitt. Ein als Rundumreflektor ausgebildeter Tripelprismen-Ring 2a aus mehreren Tripelprismen- von denen hier nur zwei Tripelprismen p1 und p2 zu sehen sind - ist schwimmend in einer Fassung gehalten. Die Fassung weist zwei Fassungskörper 3a und 3b auf, die jeweils Kegel-förmig und zusammen Doppelkegel-förmig geformt sind. Die beiden Fassungskörper 3a und 3b umfassen hier jeweils eine gummielastische äussere Komponente 4a und 4b und eine hartelastische innere Komponente 5a und 5b. In den inneren Komponenten 5a und 5b sind Aufnahmen ausgebildet, in denen ein Teilbereich 6a eines Lotstocks 6 vorgespannt gehalten wird.

Der Teilbereich 6a des Lotstocks 6 ist als Karbonstab ausgebildet und stellt ein Verbindungsteil zwischen den Fassungskörpern 3a und 3b der Fassung dar. Der Lotstock 6, der lediglich mit gestrichelten Linien angedeutet ist, wird über ein unteres Adapterelement 9b mittelbar mit dem Teilbereich 6a verbunden. Ein oberes Adapterelement 9a ist zum mittelbaren Ankoppeln weiterer Bauteile an den Lotstock 6 respektive den Teilbereich 6a vorgesehen.

Im oberen Bereich des oberen Fassungskörpers 3a ist ein erster Membranhalter 7a mit einer ersten Membran 8a angeordnet, im unteren Fassungskörper 3b ein zweiter Membranhalter 7b mit einer zweiten Membran 8b im unteren Bereich des Körpers. Die Membranen 8a und 8b sind aus Federstahl ausgebildet.

Der Tripelprismen-Ring 2a schwimmt auf den gummielastischen äusseren Komponenten 4a und 4b der Fassungskörper 3a und 3b. Damit sich bei Vibration des Zielobjekts 1a die den Lichteintrittsflächen der Prismen gegenüberliegenden - inneren - Prismenecken nicht am Karbonstab reiben, kann ein Freiraum zwischen dem Tripelprismen-Ring 2a und den äusseren Komponenten 4a und 4b vorgesehen sein, der mit einem weichen Material, wie einem gummiartigen Kleber, ausgegossen wird. Derart ist zusätzlich ein hermetisch abgedichtetes, korrosionsbeständiges System realisierbar.

Anhand der schwimmenden Lagerung des Tripelprismen-Rings 2a und der Verbindung des oberen Fassungskörpers 3a mit dem unterem Fassungskörper 3b über den durch das Zentrum des Prismenkranzes 2a durchgeführten Karbonstab wird ein Kraftschluss über den Tripelprismen-Ring 2a vermieden. Ein Schlag auf das Zielobjekt 1a oder Vibration desselben wird über die schockabsorbierenden Membranen 8a und 8b gedämpft und über den Karbonstab auf die Fassungskörper 3a und 3b übertragen.

Der Lotstock 6, der den Lotstock-Teilbereich 6a umfasst, trägt das am Lotstock 6 zentriert angeordnete Zielobjekt 1a. Als weiteres Bauteil kann z.B. eine GPS-Antenne aufgenommen werden. In dieser Ausführungsform erfolgt die Aufnahme über das obere Adapterelement 9a und die Fassung des Zielobjekts 1a. Oberes Adapterelement 9a, Zielobjekt 1a, unteres Adapterelement 9b und Lotstock 6 mit Teilbereich 6a liegen dabei alle auf derselben Bezugsachse 10 durch das Zentrum der gesamten Anordnung. Alternativ könnte auch ein einstückiger Lotstock durch das Zielobjekt geführt sein, an dessen oberem Ende ein weiteres Bauteil mittel- oder unmittelbar angekoppelt werden kann.

Mit einer GPS-Antenne wird ein weiterer Referenzpunkt für eine Koordinatenbestimmung eines Messpunktes bereitgestellt. Ein erster Referenzpunkt r1 wird durch den Rundumreflektor - Tripelprismen-Ring 2a - gebildet. Mit zwei Referenzpunkten ist der Messpunkt noch genauer vermessbar.

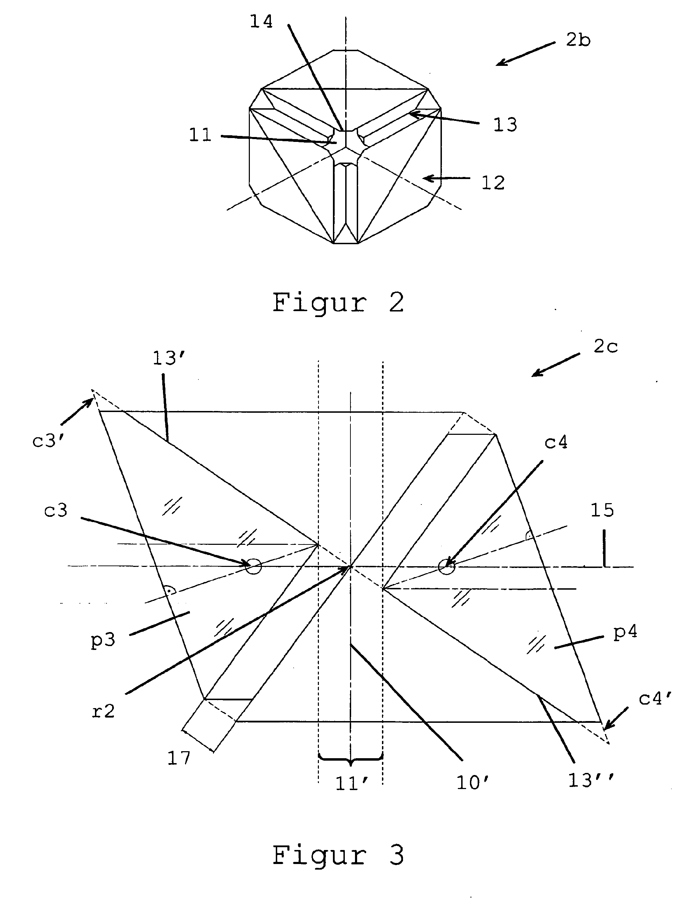

In Figur 2 ist eine Draufsicht auf einen Prismenkranz 2b eines erfindungsgemässen Zielobjekts gezeigt. Der Prismenkranz 2b ist aus sechs drehsymmetrischen Tripelprismen zusammengesetzt. Indem die Prismen flächig aufeinander geklebt sind, wird der Kranz äusserst stabil. Benachbarte Prismen sind um 180° gegeneinander verdreht und derart gegeneinander verschoben, dass ein Freiraum 11 im Zentrum des Kranzes entsteht und die virtuellen Prismenspitzen in einer Ebene liegen, was in der folgenden Figur 3 anschaulich dargestellt ist. Bei den sechs dargestellten Tripelprismen sind von drei Tripelprismen die dreieckförmigen Lichteintrittsflächen 12 sichtbar. Die weiteren drei Tripelprismen sind dagegen relativ dazu nach unten verschoben, sodass in der Draufsicht lediglich die Kanten 13 und ein Teilbereich der Spiegelrückflächen dieser Prismen zu sehen sind. Gut erkennbar ist hier, dass die zum Zentrum weisenden Prismenspitzen als angebrochene Ecken 14 ausgebildet sind. Der im Zentrum gebildete Freiraum 11 ermöglicht die Durchführung eines Lotstock-Bereichs durch den Prismenkranz 2b. Ebenso sind elektrische und/oder optische Verbindungsleitungen, wie Glasfaserkabel, durch den Freiraum 11 durchführbar. Ist beispielsweise ein Sender, Empfänger oder ein Messgerät auf ein erfindungsgemässes Zielobjekt aufgesetzt, kann eine Kabelverbindung zu diesem realisiert werden, die den Prismenkranz 2b nicht abschattet und auch den Benutzer in Bezug auf die Handlichkeit der Anordnung nicht stört.

Figur 3 zeigt einen Schnitt durch einen Prismenkranz 2c eines erfindungsgemässen Zielobjekts. Hier ist gut erkennbar, wie die einzelnen Prismen gegeneinander verschoben werden. Im Vergleich zu einer Anordnung, bei der alle Prismenspitzen im Zentrum liegen, sind die Prismen p3 und p4 hier entlang ihren Kanten 13' und 13" derart gegeneinander verschoben, dass der Freiraum 11' im Zentrum gebildet wird. Weiters erfolgt die Verschiebung 17 so, dass die virtuellen Prismenspitzen alle in derselben Ebene 15, die senkrecht auf die Bezugsachse 10' durch das Zentrum steht, liegen. In der Darstellung ist gezeigt, dass die virtuellen Bilder c3 und c4 der Spitzen der dargestellten Prismen p3 und p4 in im Wesentlichen derselben Ebene 15 liegen. Dadurch wird ein Rundumreflektor bereitgestellt, der für denselben vertikalen Einfallswinkel in einem Winkelbereich von 360° rund um den Reflektor im Wesentlichen denselben Höhenwinkelmesswert liefert - der Höhenfehler des Reflektors wird reduziert bis eliminiert. Im gezeigten Ausführungsbeispiel beträgt die Verschiebung 17 = 4.41 mm, damit wird der Freiraum 11' mit einem Durchmesser von 7.2 mm gebildet. Die eingesetzten Prismen p3, p4 weisen eine Prismenhöhe von 17.4 mm und einen Brechungsindex von n = 1.75 auf. Mit dieser Ausführungsform wird der Höhenfehler Null, also vollständig eliminiert. Werden alternativ die Einstellungen zu Prismenhöhe = 17 mm, Brechungsindex = 1.75, Verschiebung = 4 mm getroffen, wird der Höhenfehler auf 0.16 mm reduziert. Dabei wird ein Freiraum mit einem Durchmesser von 6.53 mm gebildet.

Messungen auf den Rundumreflektor werden auf die Bezugsachse 10', die mit der Lotstockachse zusammenfällt, bezogen. Das auf der Bezugsachse 10' liegende Zentrum des Prismenkranzes 2c stellt einen Referenzpunkt r2 der Messung dar. Um diesen Bezug auf die Bezugsachse 10' treffen zu können, wird einem Reflektor eine typspezifische Reflektorkonstante zugeordnet. Bei einer Verschiebung der Prismen ändert sich diese Reflektorkonstante. Erfindungsgemäss wird nun vorgesehen, als retroreflektive Elemente des Rundumreflektors Tripelprismen mit einem im Vergleich zu üblichen Reflektorgläsern mit einem Brechungsindex von n ≈ 1.5 höherbrechenden Glas zu verwenden. Im gezeigten Ausführungsbeispiel sind die Prismen aus dem Glas mit dem Brechungsindex von n = 1.75 ausgebildet. Zusammen mit der Prismenhöhe wird damit die Reflektorkonstante derart eingestellt, dass sie einer in vielen Messinstrumenten standardmässig vorgesehenen Reflektorkonstante entspricht. Mit n ≥ √3 wird zusätzlich die Wirkung erzielt, dass Störreflexe verringert oder sogar vermieden werden und ein in Bezug auf die Genauigkeit einer Koordinatenbestimmung und auch für ATR-Geräte verbesserter Rundumreflektor bereitgestellt wird.

Um ein in Bezug auf seine Handhabung möglichst unempfindliches Zielobjekt zu bilden, wird der Prismenkranz 2c in einer Fassung angeordnet. Die Spitzen c3' und c4' der jeweiligen Prismen-Lichteintrittsflächen können dabei in der Fassung versenkt oder auch abgeschliffen werden, sodass das Zielobjekt keine abstehenden Ecken und Kanten aufweist.

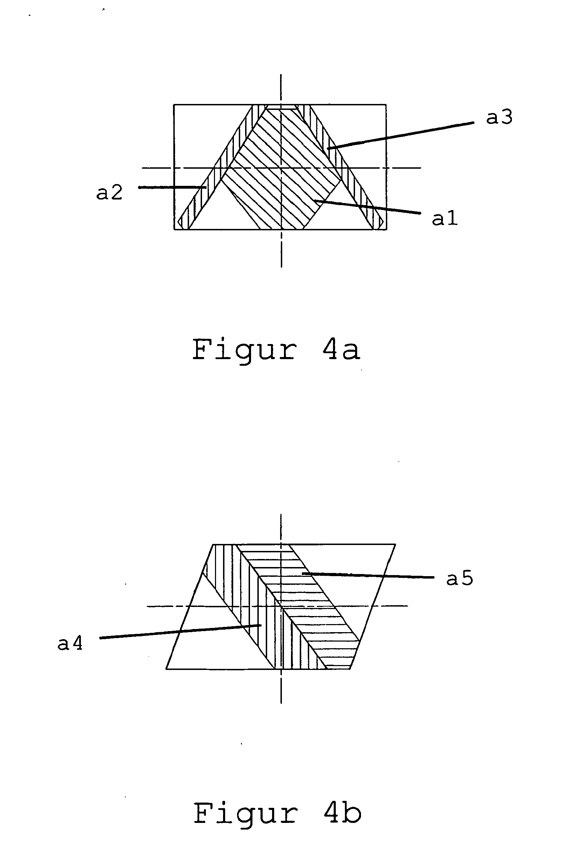

Die Teilfiguren 4a und 4b stellen Frontansichten auf einen Glasring - Prismenring - eines erfindungsgemässen Zielobjekts dar. Der Prismenring ist entsprechend der Anordnung aus Figur 2 mit sechs Prismen gebildet. Diese Anordnung ermöglicht die Ausbildung eines Prismenrings mit einer im Wesentlichen geschlossenen, zusammenhängenden Aussenfläche. Figur 4a zeigt eine Frontansicht, bei der das Messinstrument und/oder der Beobachter die Eintrittsfläche eines Prismas des Rings frontal und senkrecht anvisiert. In Figur 4b ist der Prismenring aus Figur 4a um einen horizontalen Winkel von 30 Grad gedreht - der Blick trifft auf die Kante benachbarter Prismen. Die schraffierten Flächen zeigen die jeweiligen freien Öffnungen - die dem Querschnitt der zum Messinstrument zurückreflektierten Strahlen entsprechen - der Prismen. In der Stellung - Ausrichtung - des Zielobjekts von Figur 4b sieht das Messinstrument zwei freie Öffnungen a4 und a5, in der Stellung von Figur 4a drei freie Öffnungen a1, a2 und a3. Durch die Anordnung der Prismen berühren sich die freien Öffnungen benachbarter Prismen, sodass eine im Wesentlichen zusammenhängende Reflexionsfläche gebildet wird.

Die Darstellung der Figur 5 zeigt eine Aussenansicht eines erfindungsgemässen Zielobjekts 1b. Aus der Darstellung wird insbesondere ersichtlich, dass das Zielobjekt 1b eine äusserst kompakte und stabile Reflektoreinheit bildet. Die doppelkegelförmige Anordnung der beiden Fassungskörper 3a' und 3b' bewirkt, dass das Zielobjekt beim Umfallen auf die Fassungskörper 3a' und 3b' und nicht auf den zwischen den Fassungskörpern 3a' und 3b' angeordneten Tripelprismen-Ring 2d fällt. Die Ausbildung des zentralen Freiraums im Tripelprismen-Ring 2d und - zumindest teilweise - in den Fassungskörpern 3a' und 3b' stärkt die Stabilität der Anordnung weiter, indem ein Lotstock-Teilbereich durch das Zentrum der Anordnung führbar ist. Das optische Zentrum, der geometrische Schwerpunkt und der Massenschwerpunkt des Zielobjekts 1b liegen hier alle auf derselben Bezugsachse 10", die mit der Lotstockachse zusammenfällt. Mit einem durchgeführten Teilbereich, den elastischen Fassungskörpern 3a' und 3b' und symmetrisch zum Zentrum in den Fassungskörpern 3a' und 3b' angebrachten elastischen, Schock-absorbierenden Membranen - wie in Figur 1 gezeigt - werden Schläge und Vibrationen abgefangen und gedämpft. Der Tripelprismen-Ring 2d ist in den Fassungskörpern 3a' und 3b' schwimmend gelagert und von einer Krafteinwirkung weitgehend entkoppelt. Mit der zentralen Durchführung wird weiter vorteilhaft die stabile Anordnung realisiert, ohne dass eine äussere Abschattung des Tripelprismen-Rings 2d erfolgt. Gut erkennbar ist in dieser Darstellung auch, dass der Tripelprismen-Ring 2d mit hier sechs Tripelprismen, von denen nur ein erstes Prisma p5 und ein zweites Prisma p6 dargestellt sind, eine im Wesentlichen geschlossene Aussenfläche aufweist. Am Zielobjekt 1b ist noch ein oberes Adapterelement 9a' und ein unteres Adapterelement 9b' zum Ankoppeln von weiteren Bauteilen, wie Halte- und/oder Messvorrichtungen, angebracht.

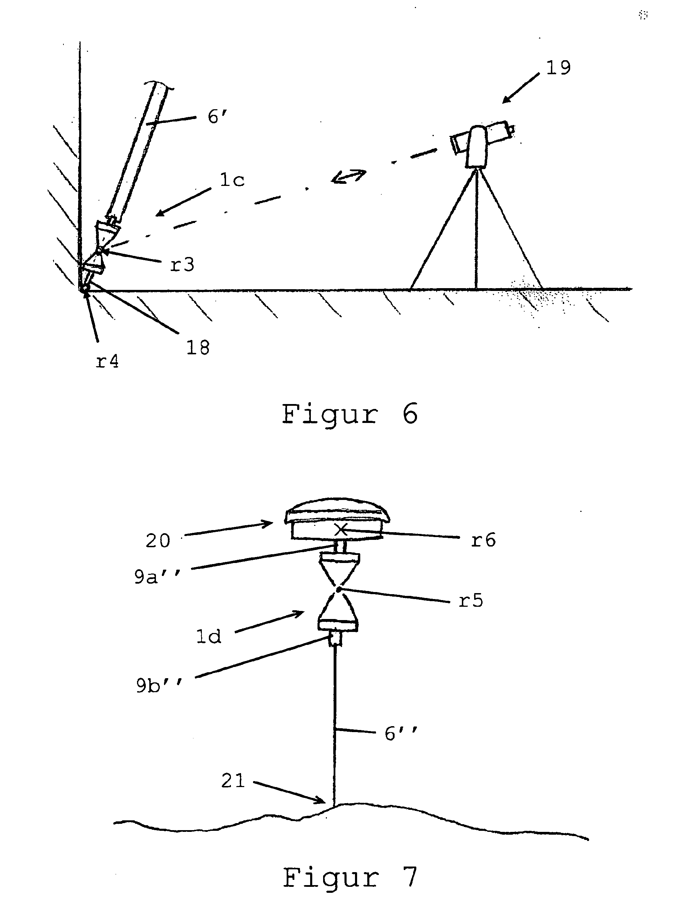

Figur 6 zeigt ein erfindungsgemässes Zielobjekt 1c in einer Messtaster-Anwendung. An das Zielobjekt 1c ist einenends ein Lotstock 6' und andernends eine Tastspitze 18 angekoppelt. Die Ausbildung eines Messtasters könnte auch erfolgen, indem der Lotstock 6' gänzlich durch das Zielobjekt 1c hindurchgeführt wird und als Tastspitze an dessen oberem Ende herausragt. Mit der - im Vergleich zum Lotstock 6' - kurzen Tastspitze 18 kann das Zielobjekt 1c sehr präzise an einem Messpunkt angesetzt werden. Das Zielobjekt 1c wird mit einem Tachymeter 19 mit ATR-Funktion anvisiert und vermessen. Anhand der Vermessung werden die Koordinaten eines durch das Zielobjekt 1c definierten ersten Referenzpunkts r3 bestimmt. Ein zweiter Referenzpunkt r4 wird durch die Tastspitze 18 festgelegt, dessen Koordinaten anhand der Koordinaten des ersten Referenzpunkts r3 und der mit weiteren im Lotstock 6' untergebrachten Sensoren, wie Neigungs- und Richtungsmesser, bestimmten Lagebeziehung der Tastspitze 18 zum ersten Referenzpunkt r3 abgeleitet werden.

In Figur 7 ist eine Vorrichtung mit einem erfindungsgemässen Zielobjekt 1d, einer GPS-Antenne 20 und einem Lotstock 6" dargestellt. Das Zielobjekt 1d ist über ein Adapterelement 9b" am Lotstock 6" angekoppelt. Auch die GPS-Antenne 20 ist mittels eines Adapterelements 9a" am Lotstock 6" angebracht, sodass das Zielobjekt 1d, die GPS-Antenne 20 und der Lotstock 6" auf ein- und derselben Achse liegen. Der Lotstock 6" ist - beispielsweise mittels eines Neigungssensors - lotrecht über einem Messpunkt 21 aufgestellt und positioniert das Zielobjekt 1c und die GPS-Antenne 20 an diesem Messpunkt 21. Die Koordinaten des Messpunkts 21 sind bedarfsweise einerseits anhand der bekannten Länge des Lotstocks 6" und einer optischen Bestimmung der Koordinaten eines Referenzpunkts r5 des Zielobjekts 1d ermittelbar, andererseits anhand einer Bestimmung der Koordinaten eines Referenzpunktes r6 der GPS-Antenne 20 anhand von Satellitensignalen zusammen mit der Lotstockhöhe bis zum Referenzpunkt r6. Durch die vorteilhafte Anordnung der Bauteile liegen der Referenzpunkt r5 des Zielobjekts 1d und der Referenzpunkt r6 der GPS-Antenne 20 auf derselben Bezugsachse, die mit der Lotstockachse zusammenfällt. Dadurch sind die beiden Methoden zur Bestimmung der Lage der beiden Referenzpunkte r5 und r6 einfach kombinierbar und damit die Koordinaten des Messpunktes 21 mit hoher geodätischer Genauigkeit bestimmbar.

**Patentansprüche**

1. Zielobjekt (1a,1b,1c,1d) zur Retroreflexion einer optischen Strahlung mit wenigstens sechs, insbesondere nur sechs, gleichartigen, Ring-artig zu einem Rundum-Reflektor zusammengesetzten Tripelprismen (p1,p2,p3,p4, p5,p6), welcher Rundum-Reflektor an einem geodätischen Lotstock (6,6',6") anordenbar ist, wobei

　　- das Zentrum des durch die Tripelprismen (p1,p2, p3,p4,p5,p6) gebildeten Rings das optische Zentrum des Rundum-Reflektors bildet,
　　- die Tripelprismen (p1,p2,p3,p4,p5,p6) als - insbesondere im wesentlichen drehsymmetrische
　　- Tripelprismen (p1, p2,p3,p4,p5,p6) mit jeweils einer - insbesondere im wesentlichen gleichseitig - dreieckförmigen Lichteintrittsfläche (12) ausgebildet sind und
　　- aufeinander folgende, benachbarte Tripelprismen (p1, p2,p3,p4,p5,p6) um 180° gegeneinander gedreht, mit jeweils direkt sich berührenden Seitenflächen angeordnet sind,

　　**dadurch gekennzeichnet, dass**
　　die Anordnung der Tripelprismen (p1,p2,p3,p4, p5,p6) derart ist, dass im Zentrum des Rings ein Freiraum (11,11') zur Aufnahme eines Teilbereichs (6a) des Lotstocks (6) gegeben ist, und dass die virtuellen Bilder (c3,c4) der Tripelprismenspitzen jeweils im wesentlichen in einer Ebene (15) liegen, die senkrecht zu einer durch das Zentrum des Rings gehenden, zur Längserstreckung des Lotstocks (6) parallel verlaufenden Bezugsachse (10,10', 10") liegt.

2. Zielobjekt (1a,1b,1c,1d) nach Anspruch 1, **dadurch gekennzeichnet, dass** die Tripelprismenspitzen als angebrochene Ecken (14) ausgebildet sind.

3. Zielobjekt nach einem der vorhergehenden Ansprüche, **dadurch gekennzeichnet, dass** die Tripelprismen (p3,p4) aus Glas mit einem Brechungsindex $n \geq \sqrt{3}$　bestehen.

4. Zielobjekt (1a,1b,1c,1d) nach einem der vorhergehenden Ansprüche, **dadurch gekennzeichnet, dass** die Tripelprismen (p1,p2,p3,p4,p5,p6) miteinander fest verbunden, insbesondere verkittet sind, solcherart als in sich stabiler Ring vorliegend.

5. Zielobjekt (1a,1b,1c,1d) nach einem der vorhergehenden Ansprüche, **dadurch gekennzeichnet, dass** - bei Blick auf den Tripelprismen-Ring im wesentlichen in Richtung der senkrecht zur Bezugsachse und durch das Symmetriezentrum des Tripelprismen-Rings gehenden Ebene - die freien Öffnungen (a1,a2,a3,a4,a5) benachbarter Tripelprismen sich gegenseitig berühren und dass der Flächenschwerpunkt aller freien Öffnungen (a1,a2,a3,a4,a5) nahe zum Symmetriezentrum des Tripelprismen-Rings liegt.

**6.** Zielobjekt (1a,1b,1c,1d) nach einem der vorhergehenden Ansprüche, **dadurch gekennzeichnet, dass** der Tripelprismen-Ring (2a,2d) über eine, vorzugsweise aus hartelastischem Material, wie Gummi, bestehenden, Doppelkegel-förmigen Fassung - insbesondere schwimmend - gehalten ist, welche Fassung zwei Kegel-förmige Fassungskörper (3a, 3b,3a',3b'), jeweils mit einem zentralen Freiraum zur Aufnahme des Teilbereichs (6a) des Lotstocks (6) aufweist, wobei die Spitzen der beiden Fassungskörper (3a,3b,3a',3b') gegen das Zentrum des Tripelprismen-Rings (2a,2d) gerichtet sind.

**7.** Zielobjekt nach Anspruch 6, **dadurch gekennzeichnet, dass** - insbesondere als Korrosionsschutz - zwischen Tripelprismen-Ring und Fassung eine Ausfüllung aus weichelastischem Material vorgesehen ist

**8.** Zielobjekt (1a,1b,1c,1d) nach Anspruch 6 oder 7, **dadurch gekennzeichnet, dass** der Teilbereich (6a) des Lotstocks (6) sich durch das Zentrum der Fassung und damit durch das Zentrum des Tripelprismen-Rings (2a,2d) erstreckt, welcher Teilbereich (6a) insbesondere aus hochfestem Material, wie Kohlefaser und/oder Verbundstoff, besteht.

**9.** Zielobjekt nach Anspruch 8, **dadurch gekennzeichnet, dass** der Lotstock-Teilbereich (6a) in der Fassung derart, insbesondere vorgespannt, gehalten wird, dass eine kraftübertragende Verbindung von dem einen Fassungskörper (3a,3a') zu dem anderen Fassungskörper (3b,3b') über den Teilbereich (6a) des Lotstocks (6) erfolgt und der Tripelprismen-Ring (2a,2d) von der Kraftübertragung im wesentlichen entkoppelt ist.

**10.** Zielobjekt (1a,1b)) nach einem der Ansprüche 6 bis 9, **dadurch gekennzeichnet, dass** den beiden Fassungskörpern (3a,3b,3a',3b') - jeweils beidenends der Doppelkegel-förmigen Fassung - elastische, Schockabsorbierende Elemente, insbesondere in Form von Membranen (8a,8b), zugeordnet sind.

**11.** Zielobjekt nach einem der Ansprüche 8 bis 10, **dadurch gekennzeichnet, dass** durch das Zentrum der Fassung und damit durch das Zentrum des Tripelprismen-Rings - zusätzlich oder alternativ zu dem Lotstock-Teilbereich - eine Durchführung zur Aufnahme von beispielsweise optischen oder elektrischen Verbindungsleitungen vorgesehen ist.

**12.** Zielobjekt (1a,1b,1c,1d) nach einem der Ansprüche 8 bis 11 als Modul-artiger Bauteil für einen Lotstock (6,6',6"), der zur Aufnahme weiterer Bauteile vorgesehen ist, wie einer GPS-Antenne (20), einer weiteren optischen Zieleinrichtung oder eines Tastspitze (18), wobei die Lage dieser Bauteile in definiertem Bezug zu einem auf der Bezugsachse liegenden Referenzpunkt (r3,r5) steht.

**13.** Vorrichtung, mit

    - einem Lotstock (6")
    - einem Zielobjekt (1d) entsprechend einem der Ansprüche 8 bis 12 und
    - einer GPS-Antenne (20),

wobei Lotstock (6"), Zielobjekt (1d) und GPS-Antenne (20) derart zusammengestellt sind, dass die Bezugsachse des Zielobjekts (1d) und die Bezugsachse der GPS-Antenne (20) mit der Achse des Lotstocks (6")zusammenfallen und Referenzpunkte (r5,r6), die dem Zielobjekt (1d) einerseits und der GPS-Antenne (20) andererseits zugeordnet sind, auf dieser gemeinsamen Achse liegen.

**14.** Verwendung eines Lotstocks (6') mit daran angebrachtem Zielobjekt (1c) nach einem der Ansprüche 8 bis 12 als Messtaster.

**Claims**

**1.** Target object (1a, 1b, 1c, 1d) for retroreflection of optical radiation, comprising at least six, in particular only six, triple prisms (p1, p2, p3, p4, p5, p6) of the same type which are combined in a ring-like manner to form an all-round reflector which can be arranged on a geodetic surveyor's pole (6,6',6"),

    - the centre of the ring formed by the triple prisms (p1, p2, p3, p4, p5, p6) forming the optical centre of the all-round reflector,
    - the triple prisms (p1, p2, p3, p4, p5, p6) being formed as - in particular substantially rotationally symmetrical - triple prisms (p1, p2, p3, p4, p5, p6) having in each case a - in particular substantially equilateral - triangular light entry surface (12) and
    - successive, adjacent triple prisms (p1, p2, p3, p4, p5, p6) being arranged rotated relative to one another by 180°, with in each case side faces directly in contact,

**characterized in that** the arrangement of the triple prisms (p1, p2, p3, p4, p5, p6) is such that a clearance (11, 11') for receiving a part-region (6a) of the surveyor's pole (6) is present in the centre of the ring, and **in that** the virtual images (c3, c4) of the triple prism vertices are present in each case substantially in a plane (15) which is perpendicular to a reference axis (10, 10', 10") passing through the centre of the ring and parallel to the longitudinal dimension of the surveyor's pole (6).

2. Target object (1a, 1b, 1c, 1d) according to Claim 1, **characterized in that** the triple prism vertices are in the form of cut-off corners (14).

3. Target object according to either of the preceding claims, **characterized in that** the triple prisms (p3, p4) consist of glass having a refractive index ($n \geq \sqrt{3}$.

4. Target object (1a, 1b, 1c, 1d) according to any of the preceding claims, **characterized in that** the triple prisms (p1, p2, p3, p4, p5, p6) are firmly bonded, in particular cemented, to one another so as to be present in a stable ring.

5. Target object (1a, 1b, 1c, 1d) according to any of the preceding claims, **characterized in that** - when the triple prism ring is viewed substantially in the direction of the plane perpendicular to the reference axis and passing through the centre of symmetry of the triple prism ring - the free openings (a1, a2, a3, a4, a5) of adjacent triple prisms touch one another and **in that** the centre of area of all free openings (a1, a2, a3, a4, a5) is close to the centre of symmetry of the triple prism ring.

6. Target object (1a, 1b, 1c, 1d) according to any of the preceding claims, **characterized in that** the triple prism ring (2a, 2d) is held - in particular suspended - via a holder preferably consisting of hard resilient material, such as rubber, and in the form of a double cone, which holder has two conical holder bodies (3a, 3b, 3a', 3b'), each having a central clearance for receiving the part-region (6a) of the surveyor's pole (6), the vertices of the two holder bodies (3a, 3b, 3a', 3b') being oriented towards the centre of the triple prism ring (2a, 2d).

7. Target object according to Claim 6, **characterized in that** a filling comprising flexible and resilient material is provided - in particular as corrosion protection - between triple prism ring and holder.

8. Target object (1a, 1b, 1c, 1d) according to Claim 6 or 7, **characterized in that** the part-region (6a) of the surveyor's pole (6) extends through the centre of the holder and hence through the centre of the triple prism ring (2a, 2d), which part-region (6a) consists in particular of high-strength material, such as carbon fibres and/or composite material.

9. Target object according to Claim 8, **characterized in that** the part-region (6a) of the surveyor's pole is held in the holder in such a way, in particular with initial tension, that there is a force-transmitting connection from one holder body (3a, 3a') to the other holder body (3b, 3b') via the part-region (6a) of the surveyor's pole (6) and the triple prism ring (2a, 2d) is substantially decoupled from the force transmission.

10. Target object (1a, 1b) according to any of Claims 6 to 9, **characterized in that** resilient, shock-absorbing elements, in particular in the form of membranes (8a, 8b), are coordinated with the two holder bodies (3a, 3b, 3a', 3b') - in each case at both ends of the holder in the form of a double cone.

11. Target object according to any of Claims 8 to 10, **characterized in that** a passage for receiving, for example, optical or electrical connecting lines is provided through the centre of the holder and hence through the centre of the triple prism ring - in addition or alternatively to the part-region of the surveyor's pole.

12. Target object (1a, 1b, 1c, 1d) according to any of Claims 8 to 11 as a modular component for a surveyor's pole (6, 6', 6"), which is provided for receiving further components, such as a GPS antenna (20), a further optical target device or a probe tip (18), the position of these components having a defined relationship with a reference point (r3, r5) located on the reference axis.

13. Device comprising

    - a surveyor's pole (6"),
    - a target object (1d) according to any of Claims 8 to 12 and
    - a GPS antenna (20),

surveyor's pole (6"), target object (1d) and GPS antenna (20) being combined in such a way that the reference axis of the target object (1d) and the reference axis of the GPS antenna (20) coincide with the axis of the surveyor's pole (6") and reference points (r5, r6) which are coordinated with the target object (ld) on the one hand and with the GPS antenna (20) on the other hand are located on this common axis.

14. Use of a surveyor's pole (6') with attached target object (1c) according to any of claims 8 to 12 as a measuring sensor.

**Revendications**

1. Objet cible (1a, 1b, 1c, 1d) destiné à la rétro-réflexion d'un rayonnement optique, comprenant au moins six, en particulier seulement six, prismes triples (p1,p2,p3,p4,p5,p6) de même type, composés à la manière d'un anneau en un réflecteur panoramique, ledit réflecteur panoramique étant susceptible d'être agencé sur une canne (6,6',6'') géodésique,

- le centre de l'anneau formé par les prismes triples (p1,p2,p3,p4,p5,p6) forme le centre optique du réflecteur panoramique,
- les prismes triples (p1,p2,p3,p4,p5,p6) sont réalisés sous forme de prismes triples (p1,p2, p3,p4,p5,p6) - répondant en particulier essentiellement à une symétrie de rotation - avec chaque fois une surface d'entrée de lumière (12) de forme triangulaire - en particulier essentiellement équilatérale - et
- des prismes triples (p1,p2,p3,p4,p5,p6) voisins, se suivant les uns les autres, sont tournés de 180° les uns par rapport aux autres, avec chaque fois des surfaces latérales se touchant directement,

**caractérisé en ce que**
l'agencement des prismes triples (p1,p2,p3,p4, p5,p6) est tel que, au centre de l'anneau, est créé un espace libre (11,11') pour recevoir une zone partielle (6a) de la canne (6), et **en ce que** les images (c3,c4) virtuelles des pointes de primes triples sont chacune situées sensiblement dans un plan (15) situé perpendiculairement à un axe de référence (10, 10', 10'') passant par le centre de l'anneau, s'étendant parallèlement à l'étendue longitudinale de la canne géodésique (6).

**2.** Objet cible (1a, 1b, 1c, 1d) selon la revendication 1, **caractérisé en ce que** les pointes de primes triples sont réalisées sous forme de coins (14) cassés.

**3.** Objet cible selon l'une des revendications précédentes, **caractérisé en ce que** les primes triples (p3, p4) sont composés de verre ayant un indice de réfraction n≥√3.

**4.** Objet cible (1a, 1b, 1c, 1d) selon l'une des revendications précédentes, **caractérisé en ce que** les prismes triples (p1,p2,p3,p4,p5,p6) sont reliés ensemble rigidement, en particulier sont mastiqués ensemble rigidement, en se présentant de cette manière sous la forme d'un anneau stable en soi.

**5.** Objet cible (1a, 1b, 1c, 1d) selon l'une des revendications précédentes, **caractérisé en ce que** - en observant l'anneau en prismes triples, sensiblement en direction du plan passant perpendiculairement à l'axe de référence et par le centre de symétrie de l'anneau en prismes triples - les ouvertures (a1,a2, a3,a4,a5,a6) libres de prismes triples voisins se touchent mutuellement, et **en ce que** le barycentre des surfaces de toutes les ouvertures (a1,a2, a3,a4,a5,a6) libres est situé au voisinage du centre de symétrie de l'anneau en prismes triples.

**6.** Objet cible (1a, 1b, 1c, 1d) selon l'une des revendications précédentes, **caractérisé en ce que** l'anneau en prismes triples (2a, 2d) est maintenu - en particulier flottant - par l'intermédiaire d'une monture en forme de cône double, composée de préférence d'un matériau élastiquement dur, tel que du caoutchouc, ladite monture présentant deux corps de monture (3a,3b,3a',3b') en forme de cône, chacun avec un espace libre central pour recevoir la zone partielle (6a) de la canne (6), les pointes des deux corps de monture (3a,3b,3a',3b') étant orientées vers le centre de l'anneau en prismes triples (2a, 2d).

**7.** Objet cible selon la revendication 6, **caractérisé en ce qu'**un remplissage - en particulier faisant office de protection contre la corrosion - en matériau élastiquement mou est prévu entre anneau en prismes triples et monture.

**8.** Objet cible (1a, 1b, 1c, 1d) selon la revendication 6 ou 7, **caractérisé en ce que** la zone partielle (6a) de la canne (6) passe par le centre de la monture et ainsi passe par le centre de l'anneau en prismes triples (2a, 2d), ladite zone partielle (6a) étant composée en particulier d'un matériau hautement rigide, tel que de la fibre de carbone et/ou un matériau composite.

**9.** Objet cible selon la revendication 8, **caractérisé en ce que** la zone partielle (6a) de canne est maintenue dans la monture de manière qu'une liaison transmettant les efforts s'effectue, d'un corps de monture (3a, 3a') à l'autre corps de monture (3b,3b'), par l'intermédiaire de la zone partielle (6a) de la canne (6), et l'anneau en prismes triples (2a, 2d) est essentiellement désaccouplé de la transmission de forces.

**10.** Objet cible (1a, 1b) selon l'une des revendications 6 à 9, **caractérisé en ce qu'**aux deux corps de monture (3a,3b,3a',3b') - chaque fois aux deux extrémités de la monture en forme de cône double - sont associés des éléments élastiques, absorbant les chocs, en particulier se présentant sous la forme de membranes (8a,8b).

**11.** Objet cible selon l'une quelconque des revendications 8 à 10, **caractérisé en ce que**, par le centre de la monture et, ainsi, par le centre de l'anneau en prismes triples - en plus ou en variante à la zone partielle de canne - est prévu un passage pour recevoir des lignes de liaison, par exemple optiques ou électriques.

**12.** Objet cible (1a, 1b, 1c, 1d) selon l'une des revendications 8 à 11, sous forme de composant du genre modulaire pour une canne (6, 6', 6"), prévue pour supporter d'autres composants, tels qu'une antenne GPS (20), un autre dispositif de vise optique ou une pointe de palpation (18), la position de ces composants étant dans une référence définie par rapport à un point de référence (r3,r5) situé sur l'axe de référence.

13. Dispositif, comprenant :

   - une canne (6"),
   - un objet cible (1d) correspondant à l'une des revendications 8 à 12, et
   - une antenne GPS (20),

   la canne (6"), l'objet cible (1d) et l'antenne GPS (20) étant combinés de manière que l'axe de référence de l'objet cible (1d) et l'axe de référence de l'antenne (20) coïncident avec l'axe de la canne (6"), et que des points de référence (r5,r6), associés à l'objet cible (ld), d'une part, et à l'antenne GPS (20), d'autre part, soient situés sur cet axe commun.

14. Utilisation d'une canne (6') avec un objet cible (1c) monté dessus, selon l'une des revendications 8 à 12, en tant que palpeur de mesure.

Figur 1

Figur 2

Figur 3

Figur 4a

Figur 4b

Figur 5

Figur 6

Figur 7

**IN DER BESCHREIBUNG AUFGEFÜHRTE DOKUMENTE**

**In der Beschreibung aufgeführte Patentdokumente**

- US 4875760 A
- EP 0846278 A
- US 4416509 A
- DE 10209895